# EUROPEAN PATENT SPECIFICATION

(11) **EP 3 419 754 B1**
(45) Date of publication and mention of the grant of the patent: **26.08.2020**
(21) Application number: 17706477.1
(22) Date of filing: 22.02.2017
(51) Int. Cl.: B01J 35/00, B01D 53/94, B01J 35/04, B01J 37/02, F01N 3/023, B01J 23/38, F01N 3/022, F01N 3/035, F01N 3/10

(54) **METHOD FOR THE PREPARATION OF A ZONE COATED CATALYSED MONOLITH**
VERFAHREN ZUR HERSTELLUNG EINES ZONENBESCHICHTETEN KATALYSIERTEN MONOLITHEN
PROCÉDÉ DE PRÉPARATION D'UNE ZONE MONOLITHE CATALYSÉE REVÊTUE

(30) Priority: 24.02.2016 DK 201600109
(43) Date of publication of application: 02.01.2019
(73) Proprietor: Haldor Topsøe A/S, 2800 Kgs. Lyngby (DK)
(72) Inventor: JOHANSEN, Keld, 3600 Frederikssund (DK)
(86) International application number: PCT/EP2017/053981
(87) International publication number: WO 2017/144493

(56) References cited:
- US-A1- 2005 031 514
- US-A1- 2015 224 477
- US-A1- 2015 252 708

## Description

The present invention relates to catalysed monolithic substrates. In particular, the invention provides an improved method for the preparation of a zone coated catalysed monolithic substrate, or a monolithic zone coated catalysed particulate filter by capillary suction of more than one sol-solution containing different catalytically active material and metal oxide catalyst carriers into pores in different zones of the monolithic substrate.

Catalysed monoliths are typically employed in the cleaning of engine exhaust gas for the catalytically removal of noxious compounds in the exhaust gas. For the removal of particulate matter with moderate filtration efficiency in exhaust gas from lean burning engines catalysed monoliths are used as flow through filters.

Most typically, filters for use in automotive applications with high filtration efficiency are the wall flow type filters consisting of monolithic honeycomb body, wherein particulate matter is captured on or in partition walls of the honeycomb structure. These filters have a plurality longitudinal flow channels separated by gas permeable partition walls. Gas inlet channels are open at their gas inlet side and blocked at the opposite outlet end and the gas outlet channels are open at the outlet end and blocked the inlet end, so that a gas stream entering the wall flow filter is forced through the partition walls into the outlet channels.

In addition to capturing soot particles, particulate filters are typically catalysed with catalysts active in the burning of soot and removal of nitrogen oxides (NOx), carbon monoxide and unburnt hydrocarbons, which are compounds representing a health and environmental risk and must be reduced or removed from the exhaust gas.

Catalysts being active in burning off captured soot and removal or reduction of NOx, carbon monoxide and hydrocarbons to harmless compounds are per se known in the art.

The patent literature discloses numerous cleaning systems comprising separate catalyst units for the removal of harmful compounds from engine exhaust gas.

Also known in the art are exhaust gas multifunctional particulate filters coated with different catalysts catalysing oxidation of hydrocarbons and particulate matter and selective catalytic reduction (SCR) of NOx by reaction with ammonia being added as such or as precursor thereof into the exhaust gas.

In the known multifunctional filters, the different catalysts are segmentarily or zone coated in different zones of the filter.

Washcoating of a monolithic or honeycomb monolithic substrate is usually performed by slurry pickup in the substrate by pouring the slurry into the channels of the monolithic substrate, or by dipping the substrate at one side into the washcoat slurry and optionally applying vacuum at the opposite side.

Segmentary or zone coating of different catalysts on a filter, in particular filter is an expensive and difficult preparation process.

Zone coating requires dosing of less washcoat slurry than needed for the entire monolith. As an example, a first zone is coated from one end and a second zone is coated from the opposite end of the substrate. The part to be coated is partially immersed in the coating liquid. The slurry is raised up to the desired coating profile level by vacuum applied to the top face of the part. Excess of washcoat slurry is typically blown-out by using an air knife. Washcoating of zone coated wall flow filters is particularly difficult to control as some the channels are closed at the end faces and an air knife for securing even coating distribution is hindered by the filter walls. US 2015/0224477 discloses a method for the preparation of a catalysed monolith.

Compared to known technique, the present invention suggests an easier method for the zone coating of monolithic substrates by using a sol-solution containing catalyst carrier precursors and metal catalyst precursors and suction of this sol-solution up into pores of the walls of zone to be coated solely by capillary forces and thereby avoiding excess of applied slurry.

A sol-solution is in context with present invention a mixture of a dispersed-phase of water insoluble particles and a phase of water soluble compounds in water.

Thus, the invention provides a method for the preparation of a catalysed monolith zone coated with different catalysts, comprising the steps of
a) providing a porous monolith substrate with a plurality of longitudinal flow channels separated by gas permeable partition walls, the monolith substrate having a first end face and at a distance to the first end face a second end face;
b) providing a first sol solution in an amount corresponding to at least the pore volume in a first catalyst zone of the gas permeable partition walls to be coated with the first sol solution, the first sol solution containing water soluble or suspended precursors of one or more catalytically active compounds and water soluble or suspended precursors or oxides of one or metal oxides catalyst carrier compounds, at least one of the one or more precursors or oxides is suspended and at least one of the one or more precursors is dissolved in the sol solution;
c) providing a second sol solution in an amount corresponding to at least the pore volume in a second catalyst zone of the gas permeable partition walls to be coated with the second sol solution, the second sol solution containing water soluble or suspended precursors of one or more catalytically active compounds different to the catalytically active compounds in the first sol solution and water soluble or suspended precursors or oxides of one or more metal oxides catalyst carrier compounds, at least one of the one or more precursors or oxides is suspended and at least one of the one or more precursors is dissolved in the second sol solution;
d) placing the porous monolith substrate substantially vertically in a container containing the amount of the first sol solution and dipping the first end face facing the first catalyst zone into the first sol solution;
e) sucking up the amount of the first sol solution solely by capillary forces into pores of the permeable partition walls from the first end face without applying vacuum or pressure into pores of the first zone;
f) subsequently inverting the porous monolith substrate and placing the porous monolith substrate substantially vertically in a container containing the amount of the second sol solution dipping the second end face facing the second catalyst zone into the second sol solution;
g) sucking up the amount of the second sol solution solely by capillary forces into pores of the permeable partition walls from without applying vacuum or pressure into pores of the second zone; and
h) drying and calcining the thus coated monolith substrate.

The sol solution for use in the invention is typically formulated from metal oxide precursors of ceria, alumina, titania, zirconia, silica sols in combination with dissolved catalytically active metal precursor, preferably compounds of palladium, platinum, rhodium, vanadium, molybdenum, tungsten and mixtures thereof in a liquid dispersion agent, typically aqueous solutions of acids.

Preparation of the sol solution involves conversion of monomers into a colloidal solution that acts as the precursor of discrete particles of the metal oxides catalyst carrier and catalytically active metal compounds. Typical precursors are metal nitrates and stabilized metal hydroxides or oxyhydroxides. Ammonium compounds are typical stabilizers. The acidity of the sol solution is adjusted to a pH value, where the sol is stable and does not form a gel.

The particle size of the suspended precursors is between 1-500 nm, preferably between 1- 100 nm. The size of the suspended particles is significant less than the pore size diameter in the monolith walls, namely typically 1 - 30 µm.

In order to provide the correct amount of the sol-solution, the pore volume of the zone to be coated in the monolithic substrate is determined prior to coating of the monolithic substrate. Determination of the pore volume is carried out by conventional methods known in the art.

By the method according to the invention, the sol solution is sucked up and adsorbed within the pores of monolith substrate by solely capillary forces without in the zone(s) of the monolith substrate on the walls of the substrate upwardly from the end face dipped into the sol solution without the assistance of external forces like vacuum or pressure applied on the end faces. The wetted length of the substrate that is the distance between the wetted end of the substrate and the wet front is dependent on the porosity of the substrate. The wetted length is also dependent on the liquid-air surface tension. The liquid - air tension decreases at increasing temperatures. It is therefore preferred to perform the wetting process at low temperatures, most preferably between 15 and 30°C.

As already mentioned above, the method according to the invention is in particular useful for coating different zones of a wall flow filter with the sol solution containing different kind of catalysts or the same kind of catalysts in different concentrations.

The sucking up steps can be repeated once or more times.

It might be preferred to dry and calcine the monolith substrate between the different sucking up steps.

Application of microwaves can advantageously be used in the drying step.

The monolithic substrate can in all cases be made of porous ceramic material or porous metallic material.

Preferably, the monolith substrate consists of cordierite or silicon carbide or aluminium titanate or mullite.

## Claims

1. A method for the preparation of a catalysed monolith zone coated with different catalysts, comprising the steps of
a) providing a porous monolith substrate with a plurality of longitudinal flow channels separated by gas permeable partition walls, the monolith substrate having a first end face and at a distance to the first end face a second end face;
b) providing a first sol solution in an amount corresponding to at least the pore volume in a first catalyst zone of the gas permeable partition walls to be coated with the first sol solution, the first sol solution containing water soluble or suspended precursors of one or more catalytically active compounds and water soluble or suspended precursors or oxides of one or more metal oxides catalyst carrier compounds, at least one of the one or more precursors or oxides is suspended and at least one of the one or more precursors is dissolved in the sol solution;
c) providing a second sol solution in an amount corresponding to at least the pore volume in a second catalyst zone of the gas permeable partition walls to be coated with the second sol solution, the second sol solution containing water soluble or suspended precursors of one or more catalytically active compounds different to the catalytically active compounds in the first sol solution and water soluble or suspended precursors or oxides of one or more metal oxides catalyst carrier compounds, at least one of the one or more precursors or oxides is suspended and at least one of the one or more precursors is dissolved in the second sol solution;
d) placing the porous monolith substrate substantially vertically in a container containing the amount of the first sol solution and dipping the first end face facing the first catalyst zone into the first sol solution;
e) sucking up the amount of the first sol solution solely by capillary forces into pores of the permeable partition walls from the first end face without applying vacuum or pressure into pores of the first zone;
f) subsequently inverting the porous monolith substrate and placing the porous monolith substrate substantially vertically in a container containing the amount of the second sol solution and dipping the second end face facing the second catalyst zone into the second sol solution;
g) sucking up the amount of the second sol solution solely by capillary forces into pores of the permeable partition walls from without applying vacuum or pressure into pores of the second zone; and
h) drying and calcining the thus coated monolith substrate.

2. The method of claim 1, wherein the porous monolith substrate is a wall flow filter.

3. The method of claim 1 or 2, wherein the one or more catalytically active precursors in the first or second sol solution are selected from the group consisting of compounds of palladium, platinum, rhodium, vanadium, molybdenum, tungsten and mixtures thereof.

4. The method of any one of claims 1 to 3, wherein the precursors of the one or more metal oxides catalyst carrier in the first or second sol solution are selected from the group consisting of compounds of aluminium, titanium, cerium, zirconium, silicon and mixtures thereof.

5. The method of any one of claims 1 to 4, wherein the porous monolith substrate is metallic or ceramic.

6. The method of any one of claim 1 to 5, wherein the porous monolith substrate consists of cordierite or silicon carbide or aluminium titanate or mullite.

7. The method of any one of claim 1 to 6, wherein particle size of the suspended precursors of one or more catalytically active compounds and the suspended precursors or oxides of one or more metal oxides catalyst carrier compounds is between 1 and 500 nm.

8. The method of any one of claim 1 to 6, wherein particle size of suspended precursors of one or more catalytically active compounds and the suspended precursors or oxides of one or more metal oxides catalyst carrier compounds is between 1 and 100 nm.

9. The method of any one of the preceding claims, wherein the sucking up steps e and/or g are repeated once or more times.

10. The method of any one of the preceding claims comprising a further step of drying the monolith substrate between step e and f.

11. The method of claim 10, wherein the dried monolith substrate is calcined prior to step f.

## Patentansprüche

1. Verfahren zur Herstellung einer mit verschiedenen Katalysatoren beschichteten katalytischen Monolithzone, umfassend die Schritte
a) Bereitstellen eines porösen Monolithsubstrats mit einer Vielzahl von longitudinalen Strömungskanälen, die durch gasdurchlässige Trennwände getrennt sind, wobei das Monolithsubstrat eine erste Endfläche und in einem Abstand zur ersten Endfläche eine zweite Endfläche hat;
b) Bereitstellen einer ersten Sol-Lösung in einer Menge, die mindestens dem Porenvolumen in einer ersten Katalysatorzone der mit der ersten Sol-Lösung zu beschichtenden gasdurchlässigen Trennwände entspricht, wobei die erste Sol-Lösung wasserlösliche oder suspendierte Vorläufer von einer oder mehreren katalytisch aktiven Verbindungen und wasserlösliche oder suspendierte Vorläufer oder Oxide von einer oder mehreren Metalloxidkatalysator-Trägerverbindungen enthält, wobei mindestens einer der einen oder mehreren Vorläufer oder Oxide in der Sol-Lösung suspendiert ist und mindestens einer der einen oder mehreren Vorläufer gelöst ist;
c) Bereitstellen einer zweiten Sol-Lösung in einer Menge, die mindestens dem Porenvolumen in einer zweiten Katalysatorzone der mit der zweiten Sol-Lösung zu beschichtenden gasdurchlässigen Trennwände entspricht, wobei die zweite Sol-Lösung wasserlösliche oder suspendierte Vorläufer von einer oder mehreren katalytisch aktiven Verbindungen enthält, die sich von den katalytisch aktiven Verbindungen in der ersten Sol-Lösung unterscheiden, und wasserlösliche oder suspendierte Vorläufer oder Oxide einer oder mehrerer Metalloxidkatalysator-Trägerverbindungen, wobei mindestens einer des einen oder der mehreren Vorläufer oder Oxide in der zweiten Sol-Lösung suspendiert ist und mindestens einer des einen oder der mehreren Vorläufer gelöst ist;
d) Anordnen des porösen Monolithsubstrats im Wesentlichen vertikal in einem Behälter, der die Menge der ersten Sol-Lösung enthält, und Eintauchen der ersten Endfläche, die der ersten Katalysatorzone zugewandt ist, in die erste Sol-Lösung;
e) Aufsaugen der Menge der ersten Sol-Lösung in Poren der durchlässigen Trennwände von der ersten Endfläche ausschließlich durch Kapillarkräfte ohne Anlegen von Vakuum oder Druck an Poren der ersten Zone;
f) anschließendes Umkehren des porösen Monolithsubstrats und Anordnen des porösen Monolithsubstrats im Wesentlichen vertikal in einem Behälter, der die Menge der zweiten Sol-Lösung enthäl, Eintauchen der zweiten Endfläche, die der zweiten Katalysatorzone zugewandt ist, in die zweite Sol-Lösung;
g) Aufsaugen der Menge der zweiten Sol-Lösung in Poren der durchlässigen Trennwände ausschließlich durch Kapillarkräfte ohne Anlegen von Vakuum oder Druck in Poren der zweiten Zone; und
h) Trocknen und Kalzinieren des so beschichteten Monolithsubstrats.

2. Verfahren gemäß Anspruch 1, wobei das poröse Monolithsubstrat ein Wandströmungsfilter ist.

3. Verfahren gemäß Anspruch 1 oder 2, wobei der eine oder die mehreren katalytisch aktiven Vorläufer in der ersten oder zweiten Sol-Lösung ausgewählt sind aus der Gruppe bestehend aus Verbindungen von Palladium, Platin, Rhodium, Vanadium, Molybdän, Wolfram und Gemischen davon.

4. Verfahren gemäß einem der Ansprüche 1 bis 3, wobei die Vorläufer des einen oder der mehreren Metalloxidkatalysatorträger in der ersten oder zweiten Sol-Lösung ausgewählt sind aus der Gruppe bestehend aus Verbindungen von Aluminium, Titan, Cer, Zirkonium, Silicium und Gemischen davon.

5. Verfahren gemäß einem der Ansprüche 1 bis 4, wobei das poröse Monolithsubstrat metallisch oder keramisch ist.

6. Verfahren gemäß einem der Ansprüche 1 bis 5, wobei das poröse Monolithsubstrat aus Cordierit oder Siliciumcarbid oder Aluminiumtitanat oder Mullit besteht.

7. Verfahren gemäß einem der Ansprüche 1 bis 6, wobei die Teilchengröße der suspendierten Vorläufer von einer oder mehreren katalytisch aktiven Verbindungen und der suspendierten Vorläufer oder Oxide von einer oder mehreren Metalloxidkatalysator-Trägerverbindungen zwischen 1 und 500 nm liegt.

8. Verfahren gemäß einem der Ansprüche 1 bis 6, wobei die Teilchengröße der suspendierten Vorläufer von einer oder mehreren katalytisch aktiven Verbindungen und der suspendierten Vorläufer oder Oxide von einer oder mehreren Metalloxidkatalysator-Trägerverbindungen zwischen 1 und 100 nm liegt.

9. Verfahren gemäß einem der vorhergehenden Ansprüche, wobei die Aufsaugschritte e und/oder g einmal oder mehrmals wiederholt werden.

10. Verfahren gemäß einem der vorhergehenden Ansprüche, umfassend einen weiteren Schritt des Trocknens des Monolithsubstrats zwischen Schritt e und f.

11. Verfahren gemäß Anspruch 10, wobei das getrocknete Monolithsubstrat vor dem Schritt f kalziniert wird.

## Revendications

1. Procédé de préparation d'une zone monolithe catalysée revêtue de différents catalyseurs, comprenant les étapes de
a) fourniture d'un substrat monolithique poreux avec une pluralité de canaux d'écoulement longitudinaux séparés par des parois de séparation perméables aux gaz, le substrat monolithique ayant une première face d'extrémité et à une distance de la première face d'extrémité une seconde face d'extrémité;
b) fourniture d'une première solution de sol en une quantité correspondant au moins au volume des pores dans une première zone de catalyse des parois de séparation perméables aux gaz à revêtir avec la première solution de sol, la première solution de sol contenant des précurseurs solubles ou en suspension dans l'eau d'un ou plusieurs composés catalytiquement actifs et des précurseurs ou oxydes solubles dans l'eau ou en suspension d'un ou plusieurs composés supports de catalyseurs à base d'oxydes métalliques, au moins l'un des un ou plusieurs précurseurs ou oxydes est en suspension et au moins l'un des un ou plusieurs précurseurs est dissous dans la solution de sol;
c) fourniture d'une seconde solution de sol en une quantité correspondant au moins au volume des pores dans une seconde zone de catalyse des parois de séparation perméables aux gaz à revêtir avec la seconde solution de sol, la seconde solution de sol contenant des précurseurs solubles ou en suspension dans l'eau d'un ou plusieurs composés catalytiquement actifs différents des composés catalytiquement actifs de la première solution de sol et des précurseurs ou oxydes solubles ou en suspension dans l'eau d'un ou plusieurs composés supports de catalyseurs à base d'oxydes métalliques, au moins l'un des un ou plusieurs précurseurs ou oxydes est en suspension et au moins l'un des un ou plusieurs précurseurs est dissous dans la seconde solution de sol;
d) le placement du substrat monolithique poreux sensiblement verticalement dans un récipient contenant la quantité de la première solution de sol et l'immersion de la première face d'extrémité faisant face à la première zone de catalyse dans la première solution de sol;
e) l'aspiration de la quantité de la première solution de sol uniquement par des forces capillaires dans les pores des parois de séparation perméables à partir de la première face d'extrémité sans appliquer de vide ou de pression dans les pores de la première zone;
f) l'inversion ensuite du substrat monolithique poreux et le placement du substrat monolithique poreux sensiblement verticalement dans un récipient contenant la quantité de la seconde solution de sol en immergeant la deuxième face d'extrémité faisant face à la seconde zone de catalyse dans la seconde solution de sol;
g) l'aspiration de la quantité de la seconde solution de sol uniquement par des forces capillaires dans les pores des parois de séparation perméables sans appliquer de vide ou de pression dans les pores de la seconde zone; et
h) le séchage et la calcination du substrat monolithique ainsi revêtu.

2. Procédé selon la revendication 1, dans lequel le substrat monolithique poreux est un filtre à parois filtrantes.

3. Procédé selon la revendication 1 ou 2, dans lequel le ou les précurseurs catalytiquement actifs dans la première ou la seconde solution de sol sont choisis dans le groupe constitué par les composés du palladium, du platine, du rhodium, du vanadium, du molybdène, du tungstène et les mélanges de ceux-ci.

4. Procédé selon l'une quelconque des revendications 1 à 3, dans lequel les précurseurs des un ou plusieurs supports de catalyseurs à base d'oxydes métalliques dans la première ou la seconde solution de sol sont choisis dans le groupe constitué par les composés d'aluminium, de titane, de cérium, de zirconium, de silicium et les mélanges de ceux-ci.

5. Procédé selon l'une quelconque des revendications 1 à 4, dans lequel le substrat monolithique poreux est métallique ou céramique.

6. Procédé selon l'une quelconque des revendications 1 à 5, dans lequel le substrat monolithique poreux est constitué de cordiérite ou de carbure de silicium ou de titanate d'aluminium ou de mullite.

7. Procédé selon l'une quelconque des revendications 1 à 6, dans lequel la taille de particule des précurseurs en suspension d'un ou plusieurs composés catalytiquement actifs et des précurseurs ou oxydes en suspension d'un ou plusieurs composés supports de catalyseurs à base d'oxydes métalliques est comprise entre 1 et 500 nm.

8. Procédé selon l'une quelconque des revendications 1 à 6, dans lequel la taille de particule des précurseurs en suspension d'un ou plusieurs composés catalytiquement actifs et des précurseurs ou oxydes en suspension d'un ou plusieurs composés supports de catalyseurs à base d'oxydes métalliques est comprise entre 1 et 100 nm.

9. Procédé selon l'une quelconque des revendications précédentes, dans lequel les étapes d'aspiration e et/ou g sont répétées une ou plusieurs fois.

10. Procédé selon l'une quelconque des revendications précédentes comprenant une étape supplémentaire de séchage du substrat monolithique entre l'étape e et f.

11. Procédé selon la revendication 10, dans lequel le substrat monolithique séché est calciné avant l'étape f.
